Europäisches Patentamt

European Patent Office

Office européen des brevets

(19)

(11) Veröffentlichungsnummer: **0 065 645**

**B1**

(12) **EUROPÄISCHE PATENTSCHRIFT**

(45) Veröffentlichungstag der Patentschrift:
**08.04.87**

(21) Anmeldenummer: **82103349.5**

(22) Anmeldetag: **21.04.82**

(51) Int. Cl.⁴: **C 25 F 3/06,** C 25 F 7/00,
B 23 H 3/00, F 02 F 3/00

(54) **Verfahren zum Bearbeiten von Oberflächen eines Werkstücks aus kohlenstoffhaltigem Gusseisen sowie Vorrichtung zum Durchführen des Verfahrens und aus Grauguss bestehender Zylinder.**

(30) Priorität: **19.05.81 DE 3119847**

(43) Veröffentlichungstag der Anmeldung:
**01.12.82 Patentblatt 82/48**

(45) Bekanntmachung des Hinweises auf die Patenterteilung:
**08.04.87 Patentblatt 87/15**

(84) Benannte Vertragsstaaten:
**AT CH DE FR GB IT LI SE**

(56) Entgegenhaltungen:
**DE-A-2 531 013**
**FR-A-1 273 987**

(73) Patentinhaber: **AUDI AG, Postfach 220, D-8070 Ingolstadt (DE)**

(72) Erfinder: **Münnighoff, Hans, Bergstrasse 46, D-8831 Lippertshofen (DE)**
Erfinder: **Indra, Fritz, Dr., Talshöhe 25, D-8939 Lindenberg (DE)**
Erfinder: **Heck, Klaus, Krumenauerstrasse 4, D-8070 Ingolstadt (DE)**
Erfinder: **Linzenkirchner, Karl, Schmellerstrasse 2, D-8070 Ingolstadt (DE)**
Erfinder: **Lindner, Horst, Silesiusstrasse 1, D-8070 Ingolstadt (DE)**

(74) Vertreter: **Le Vrang, Klaus, AUDI AG Postfach 220 Patentabteilung, D-8070 Ingolstadt (DE)**

EP 0 065 645 B1

LIBER, STOCKHOLM 1987

**Beschreibung**

Die Erfindung betrifft ein Verfahren zum Bearbeiten von Oberflächen eines Werkstückes aus kohlenstoffhaltigem Gußeisen gemäß dem Oberbegriff des Patentanspruches 1 sowie eine Vorrichtung zum Durchführe des Verfahrens.

Ein gattungsgemäßes Verfahren ist in der DE-A 25 31 013 beschrieben. Dabei wird nach dem mechanischen Bearbeiten bzw. Honen von ungehärteten Gußeisen-Gleitflächen, insbesondere Zylinderlaufflächen von Brennkraftmaschinen, die Gleitfläche einem elektrochemischen Ätzverfahren unterworfen, durch welches das bei der spanenden Bearbeitung auf die Graphitpartikel des kohlenstoffhaltigen Werkstoffes aufgeschmierte Grundgefüge weggeätzt wird.

Auch durch die FR-A 12 73 987 ist es bekannt, die Oberflächen von Lagern, Zahnrädern oder dergleichen nach deren mechanischer Bearbeitung elektrochemisch nachzuarbeiten, um die im Bereich der Graphitnester überstehenden Mikrograte zu beseitigen.

Selbst beim Einsatz des elektrochemischen Honens, bei dem das Honwerkzeug sowohl als Elektrode und damit zum elektrochemischen Abtragen als auch zum mechanischen Abtragen dient, entstehen durch die Wirkung der mechanisch arbeitenden Honsteine Verquetschungen der Graugußoberfläche.

Der Erfindung liegt die Aufgabe zugrunde, ein Verfahren zum Bearbeiten von Oberflächen eines Werkstücks aus kohlenstoffhaltigem Gußeisen sowie eine Vorrichtung zu dessen Durchführung anzugeben, mit dem bzw. der sich eine für die tribologischen Verhältnisse bei Gleitpaarungen besonders geeignete Oberflächenstruktur von kohlenstoffhaltigem Gußeisen auf wirtschaftliche Weise erzielen läßt. Weiter liegt der Erfindung die Aufgabe zugrunde, einen Zylinder für eine Brennkraftmaschine mit verbesserten Betriebseigenschaften zu schaffen.

Der das Verfahren betreffende Teil der Erfindungsaufgabe wird mit den Merkmalen des Patentanspruches 1 gelöst.

Die erfindungsgemäß hergestellte Lauffläche, die ein dunkel glänzendes Aussehen hat, zeichnet sich dadurch aus, daß tragende, ebene Plateaus, die zum Teil mit Graphit, Mischkristallen und/oder etwaigen Elektrolytrückständen plattiert sind, mit offenen Graphitlamellen wechseln. Diese Art von Oberfläche wird möglicherweise beim Einlaufen für den Reibpartner, im vorliegenden Beispiel für die Kolbenringe, gezielt als Läppmittel, so daß sich im eingelaufenen Zustand ausgezeichnet aufeinander abgestimmte Reibpartner ergeben. Die Reibpartner werden aus den fein verteilten offenen Graphitlamellen und den ebenfalls fein verteilten, zwischen den Plateaus vorhandenen Grübchen, die Öl halten, mit Schmiermittel versorgt.

Beim dem elektrochemischen Honen nachgeschalteten mechanischen Reibplattieren wird das vorstehende Graphit abgetragen, ohne daß dabei die Taschen durch benachbartes metallisches Material zugeschmiert werden. Zusätzlich werden Oberflächenbestandteile des Grundmaterials, vor allem Mischkristalle, abgerieben und anschließend aufplattiert. Bei dem Reibplattieren handelt es sich also nicht im eigentlichen Sinne um eine das Material abtragende Bearbeitung, sondern um ein Reiben mit gleichzeitigem Plattieren, wobei ein wesentlicher Teil des abgeriebenen Materials aufplattiert wird und dadurch die beschriebene Oberfläche erhalten wird.

Das aus den Graphitlamellen vorstehende Graphit wird zusammen mit den auf der elektrolytisch bearbeiteten Oberfläche abgesetzten Produkten von dem Reibplattierungswerkzeug, bevorzugt flächigen Reibplattierleisten mit in Keramikbindung befindlichem Siliciumkarbid und in wässrigem Milieu arbeitend, mitgenommen und auf die Werkstückoberfläche aufplattiert.

Vorteilhafte Weiterbildungen des erfindungsgemäßen Verfahrens sind in den Patentansprüchen 2 bis 7 angeführt. Insbesondere für die Laufflächen von Zylindern von Brennkraftmaschinen besonders geeignete Oberflächen haben sich durch die Merkmale der Patentansprüche 2 bis 4 ergeben. Gemäß Anspruch 5 werden bei der Durchführung des erfindungsgemäßen Verfahrens beim elektrochemischen Abtragen und mechanischen Bearbeiten zweckmäßigerweise verschiedene Flüssigkeiten eingesetzt, die die jeweiligen Erfordernisse am besten erfüllen. Beim mechanischen Bearbeiten kann beispielsweise mit an sich bekannten Flüssigkeiten gearbeitet werden, die für eine möglichst geringe Oberflächenverfestigung sorgen, es kann jedoch auch mit einer einzigen Flüssigkeit, z. B. einer $NaNO_3$-Lösung, gearbeitet werden, was die Durchführung des Verfahrens vereinfacht.

Die Verschleißfestigkeit der Oberfläche des Werkstücks kann entsprechend den Merkmalen des Anspruches 6 vergrößert werden, wobei das Härten durch vielerlei an sich bekannte Verfahren durchgeführt werden kann, z. B. Umschmelzhärten, induktives Härten, elektroerosives Härten usw.

Eine erfindungsgemäße Vorrichtung zum Durchführen des Verfahrens ist im Patentanspruch 8 angeführt, die sich vorteilhaft für die Bearbeitung von Sacklöchern eignet, während die Bearbeitung von Großbohrungen, z. B. Zylinderbuchsen für Großdieselmotoren vorteilhaft gemäß den Merkmalen des Patentanspruches 9 erfolgen kann.

Das Besondere einer nachdem erfindungsgemäßen Verfahren erhaltenen Lauffläche eines Zylinders gemäß Patentanspruch 10 liegt darin, daß sie bei einer geringen Rauhigkeit mit Graphit und/oder Mischkristallen plattiert ist, wodurch ein hervorragendes Einlaufund Betriebsverhalten der Gleitpartner erzielt ist.

Die Erfindung wird im folgenden anhand schematischer Zeichnungen beispielsweise und mit weiteren Einzelheiten näher erläutert:
Es zeigen:
Fig. 1 eine Seitenansicht einer Vorrichtung zum Bearbeiten einer Bohrung in einem Werkstück aus Gußeisen,
Fig. 2 eine Elektrostation der Vorrichtung gemäß Fig. 1,
Fig 3. eine Elektrode, wie sie in der Elektrostation gemäß Fig. 2 verwendet wird,
Fig. 4 eine Mechanikstation der Vorrichtung gemäß Fig. 1,
Fig. 5a einen Längsschnitt durch eine innerhalb einer Zylinderbüchse angeordnete Segmentelektrode,
Fig. 5b einen Querschnitt durch die Anordnung gemäß Fig. 5a,
Fig. 5c eine vergräßerte Einzelheit der Anordnung gemäß Fig. 5a und
Fig. 6 einen Schnitt durch eine besonders für Sacklöcher geeignete Elektrode.

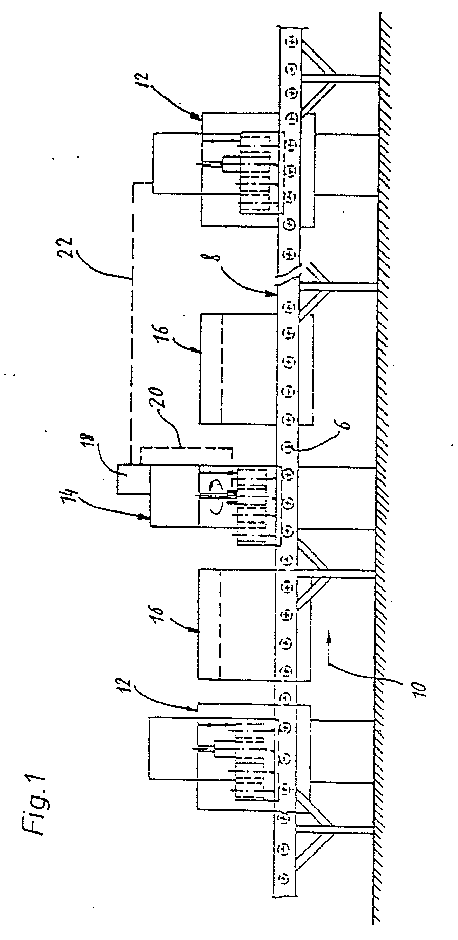

Gemäß Fig. 1 weist eine Vorrichtung zum Bearbeiten eines Werkstücks aus kohlenstoffhaltigem Gußeisen, beispielsweise von in bekannter Weise mechanisch auf eine Rauhigkeit von etwa 20 μm vorbearbeiteren Zylinderlaufflächen eines mit dem Zylinderkopf zusammengegossenen Motorblocks, eine durch hintereinander angeordnete Rollen 6 gebildete Transporteinrichtung 8 auf. Der Antrieb der Rollen 6 ist nicht im einzelnen dargestellt, da die Transportinrichtung 8 in ihrem Aufbau an sich bekannter Bauart sein kann.

Längs der Transporteinrichtung 8, deren Förderrichtung durch einen Pfeil 10 angegeben ist, sind abwechselnd Elektrostationen 12 und Mechanikstationen 14 angeordnet, von denen eine dargestellt ist. Zwischen jeder Elektrostation 12 und Mechanikstation 14 befindet sich jeweils eine Reinigungsstation 16.

Der Durchlauf des nicht im einzelnen gezeigten Werkstücks durch den dargestellten Ausschnitt der Vorrichtung ist so, daß das gemäß Fig. 1 von links her einlaufende Werkstück in die Elektrostation 12 angehalten wird und dort in der später geschilderten Weise elektrochemisch bearbeitet wird. Nach erfolgter elektrochemischer Bearbeitung wird das Werkstück aus der Elektrostation 12 zur Reinigungsstation 16 gebracht, dort von Elektrolytrückständen befreit und anschließend zur Mechanikstation 14 befördert. Dort wird es mechanisch bearbeitet; anschließend wird es zur nächsten Reinigungsstation 16 bewegt, um dort von etwaigen Rückständen an Schneidölen oder Emulsionen befreit zu werden, woraufhin es wiederum der nächsten Elektrostation 12 zugeführt wird.

In Fig. 1 zusätzlich eingetragen ist ein zur Mechanikstation 14 gehörendes Steuergerät 18, in dem in an sich bekannter Weise, beispielsweise nach dem Staudruckverfahren, der Durchmesser eines im Werkstück ausgebildeten Loches ermittelt wird. Der Meßwert wird dem Steuergerät 18 über eine Meßleitung 20 zugeführt. Anhand des ermittelten Durchmessers wird im Steuergerät 18 die Stromstärke und die Bearbeitungsdauer des Werkstücks beim nachfolgenden elektrochemischen Abtragen in der Elektrostation 12 bestimmt, wobei die Elektrostation 12 über eine Steuerleitung 22 gesteuert wird.

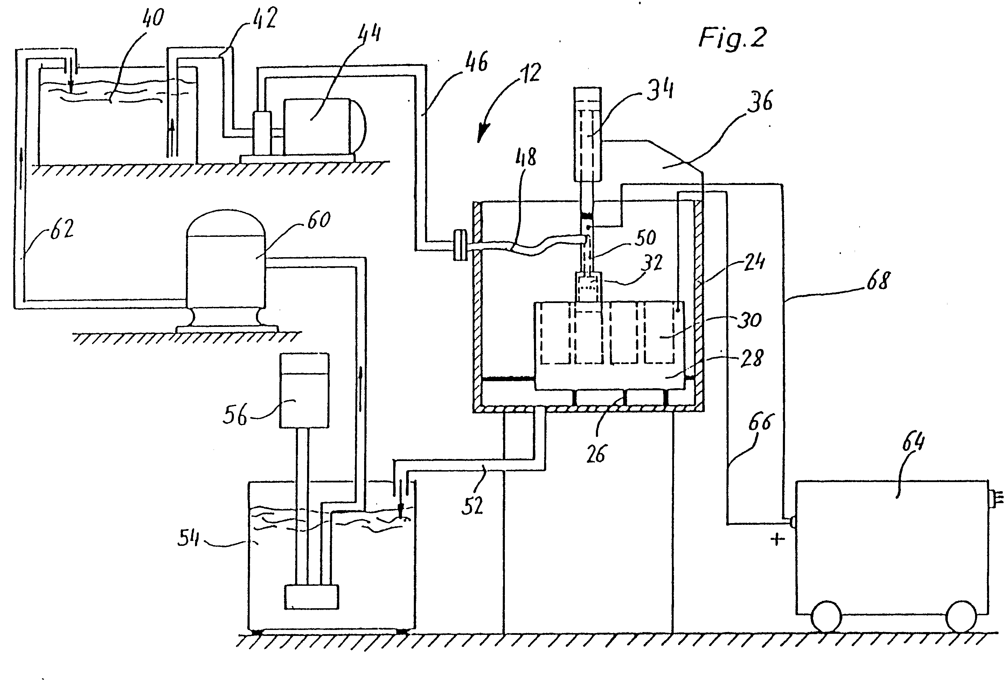

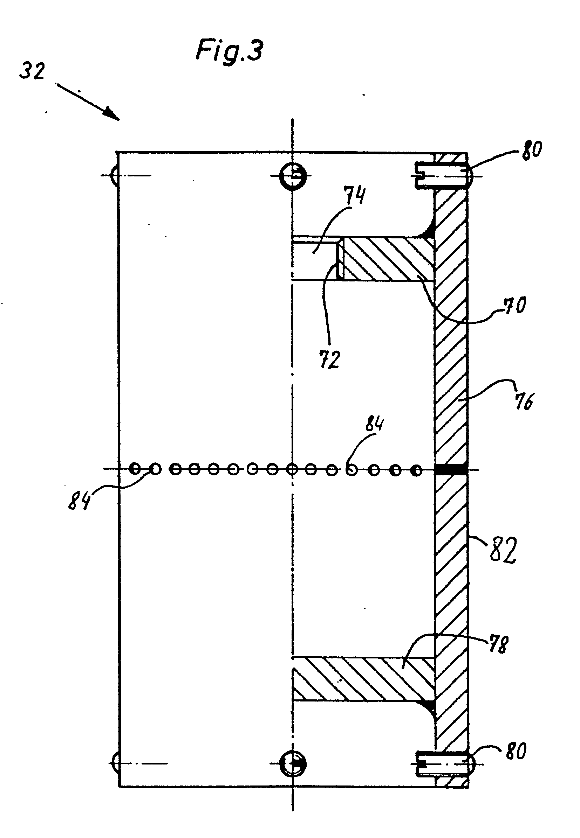

Fig. 2 zeigt Einzelheiten einer Elektrostation 12:
In einem gearbeitungsbehälter 24 befindet sich mittels Justier- und Spannvorrichtung 26 in definierter Lage gehalten ein Werkstück 28, im dargestellten Beispiel ein Metallblock mit vier Sackbohrungen 30. In eine der Bohrungen 30 fährt eine in Fig. 3 näher dargestellte Elektrode 32 ein, welche mit einem Hydraulikzylinder 34 bewegt wird, der an einem Maschinenständer 36 befestigt ist. Die Elektrode 32 ist über den Hydraulikzylinder 34 in jedwelche Position innerhalb der zu bearbeitenden Bohrung bewegbar.

Zur Beschickung der Elektrode mit Elektrolyt ist ein Elektrolytvorratsbehälter 40 vorgesehen, welcher über eine Leitung 42 mit einer Pumpe 44 verbunden ist, die Elektrolyt in eine Leitung 16 fördert. Die Leitung 46 setzt sich innerhalb des Bearbeitungsbehälters 24 in einem Schlauch 48 fort, welcher an der hohlen Elektrodenhalterung 50 angeschlossen ist.

Der aus der Elektrode 32 austretende, aus der jeweils bearbeiteten Bohrung 30 herausströmende Elektrolyt gelangt in eine Rücklaufleitung 52, die in einen Zwischenbehälter 54 mündet. Vom Zwischenbehälter 54 wird der Elektrolyt mittels einer Tauchpumpe 56 in eine Zentrifuge 60 gefördet, die zur Reinigung des Elektrolyts dient. Von der Zentrifuge 60 aus gelangt der Elektrolyt durch eine Leitung 62 hindurch zurück in den Elektrolytvorratsbehälter 40.

Zur Strombeschickung dient ein Stromversorgungsgerät 64, dessen positiver Pol über ein Kabel 66 mit dem Werkstück 28 und dessen negativer Pol über ein Kabel 68 mit der Elektrode 32 verbunden sind.

Die elektrochemische Bearbeitung des Werkstücks 28 in der Elektrostation 12 ist an sich bekannt. Die gegenüber dem Hydraulikzylinder 34 elektrisch isolierte Elektrode 32 wird in die jeweils zu bearbeitende Bohrung 30 eingefahren. Der Elektrolytkreislauf wird in Tätigkeit gesetzt und die Stromzufuhr eingeschaltet. Beim elektrochemischen Bearbeitungsvorgang kann die Elektrode 32 stillstehen oder auch entsprechend den Erfordernissen rotieren bzw. rotierend und gleichzeitig translatorisch bewegt werden.

Fig. 3 zeigt eine in ihrer rechten Hälfte aufgeschnittene Elektrode 32. Diese Elektrode ist ein insgesamt zylindrischer, in sich geschlossener Hohlkörper, dessen obere Stirnwand 70 eine mit einem Gewinde 72 versehene Anschlußöffnung 74 aufweist. Die Anschlußöffnung 74 dient zum Einschrauben eines Anschlußstutzens, durch den hindurch die Stromzufuhr und die Elektrolytzufuhr erfolgt und der zur Selestigung der Elektrode 32 an dem Hydraulikzylinder 34 (Fig. 2) dient. Die Umfangswand 76 der Elektrode 32 ist über die obere Stirnwand 70 und eine untere Stirnwand 78 hinaus verlängere und trägt Abstandshalter 80, mittels derer die zylindrische Mantelfläche 82 auf einen definierten Abstand beim Einfahren der Elektrode in eine zu bearbeitende Bohrung 30 einjustierbar ist. Es versteht sich, daß die Abstandshalter 80 aus isolierendem Material, beispielsweise Keramik oder Kunststoff, bestehen.

Die Umfangswand 76 der Elektrcde 32 ist in deren Quermittelebene mit Elektrolytaustrittsöffnungen 84 versehen.

Es versteht sich, daß die Elektrolytaustrittsöffnungen 84 entsprechend den jeweiligen Erfordernissen und dem erwünschten Ergebnis über die MMantelfläche 82 verteilt sein können. Die Elektrolytaustrittsöffnungen 84 können sowohl rund als auch von beliebiger anderer Geometrie sein. Die Wirkfläche der Elektrode, d.h. der elektrisch leitende Teil der Mantelfläche 82 kann sich über die gesamte Mantelfläche 82 erstrecken oder auch durch elektrische Isolation eines Teils der Oberfläche nur einen Teil der Mantelfläche 82 ausmachen.

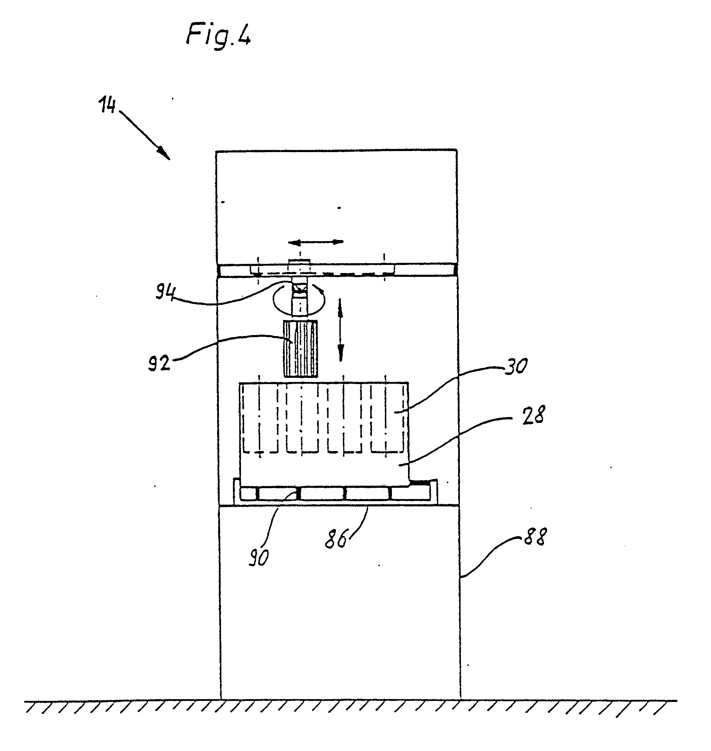

Fig. 4 zeigt eine Mechanikstation 14. Das Werkstück 28 ruht in einem Gestell 86, welches wiederum an einem Rahmen 88 befestigt ist. Zum genau definierten Positionieren des Werkstücks 28 ist das Gestell 86 mit Justier- und Spanneinrichtungen 90 versehen. Oberhalb des Werkstücks 28 ist am Rahmen 88 ein mechanisches Reibplattierungswerkzeug 92 mittels Schlittenführungen in alle drei Richtungen des Raumes bewegbar und mittels eines über ein Kardangelenk 94 an einen nicht dargestellten Drehantrieb angeschlossen, welcher zusätzlich auf- und abwärts bewegbar ist.

Nach Einfahren des Werkstücks 28 in das Gestell 86 und nach genauem Positionieren des Werkstücks 28 mittels der Justier- und Spanneinrichtungen 90 wird das Reibplattierwerkzeug 92 in eine der Bohrungen 30 eingefahren. Dabei werden die bei dem elektrochemischen Abtrag freigelegte Graphitlamellen, freiliegende Mischkristalle oder sonstige elektrochemische Prozessrückstände mechanisch gerieben und aufplattiert, wobei je nach verwendetem Reibplattierungswerkzeug 92 auch eine Verbesserung der Geometrie erfolgt und die gewünschte Oberflächenrauhigkeit und -form erzeugt werden kann.

Als Reibplattierungswerkzeug 92 sind verschiedene Werkzeuge verwendbar, beispielsweise Honahlen ähnliche Werkzeuge, die ihren Bearbeitungsdruck beispielsweise durch Fliehkraft erzeugen, Rotationsbursten mit Schleifkörpern oder auch reine Stahl- bzw. NE-Metall-Rotationsbürsten. Damit eine im wesentlichen nur reibplattierende Bearbeitung erfolgt, muß mit niedrigem Bearbeitungsdruck gearbeitet werden, wobei kein Zuschmieren der Öltaschen bildenden Graphitlamellen und keine wesentliche Kaltverfestigung der Oberfläche erfolgt. Die Bewegung des Reibplattierungswerkzeugs 92 kann nur rotatorisch als auch rotatorisch und translatorisch erfolgen.

Wenn beispielsweise mit einem Reibplattierungswerkzeug 92 in Art einer Honahle mit Honleisten aus SiC in Keramikbindung und einem Anpressdruck zwischen den weitgehend ebenen Honleisten und der Werkstückoberfläche in der Größenordnung von lediglich $10^5$ N/m$^2$ gearbeitet wird, nehmen die Honleisten das aus den Graphitlamellen vorstehende Graphit und etwaige auf der elektrochemisch bearbeiteten Oberfläche abgeschiedene Rückstände mit und plätten diese teilweise auf die zu bearbeitende Oberfläche auf. Durch die erst nach einem elektrochemischen Abtragungsschritt erfolgende Reibplattierung reicht das Graphit zusammen mit etwaigen Ablagerungen aus, um eine gezielte Aufplattierung der Werkstückoberfläche mit Graphit und/oder M23C6 Mischkristallen, bevorzug; in einer Flächendichte von 0,5 x $10^{-4}$ bis 5 x $10^{-4}$ g/cm$^2$, zu erzeugen.

Wenn bei der mechanisch reibplattierenden Bearbeitung anstatt mit Schneidöl oder Emulsion mit Elektrolyt gearbeitet wird, können die Reinigungsstationen 16 (Fig. 1) entfallen.

Die gesamte Vorrichtung kann, wie in Fig. 1 dargestellt, aus mehreren in Reihe hintereinander angeordneten Stationen aufgebaut sein. Sie kann auch als Doppelstation ausgeführt sein, wobei das Werkstück abwechselnd in der einen vorhandenen Mechanikstation und der einen vorhandenen Elektrostation bearbeitet wird.

Desweiteren versteht sich, daß die in der oder den Elektrostationen erfolgende elektrolytische Abtragung zu Beginn der Feinbearbeitung eines Werkstücks größer sein kann als gegen Schluß der Bearbeitung. Dies gilt ebenso für den Abtrag in der Mechanikstation. Vorteilhafterweise wird im letzten Arbeitsschritt des elektrolytischen Abtrags mit einer Ladungsmenge von etwa 5 bis 15 As je cm$^2$ zu bearbeitender Oberfläche gearbeitet, wobei diese Ladungsmenge beispielsweise zwischen 3 und 17s ungesetzt wird. Beim letzten mechanischen Abtragen wird vorteilhafterweise mit einer Überlappung zwischen Werkzeug und Werkstück von lediglich etwa 1 bis 5 μm gearbeitet. Es versteht sich, daß nach entsprechend ferner rein mechanischen Vorbearbeitung eine einzige elektrolytische Abtragung und anschließende Reibplattierung als Endbearbeitung ausreichen können.

Für höchst beanspruchte Werkstückoberflächen empfiehlt sich zwischen wenigstens einem der mechanischen Bearbeitungsschritte und der elektrolytischen Bearbeitungsschritte einen Arbeitsschritt einzuschieben, in welchem die Oberfläche gehärtet wird.

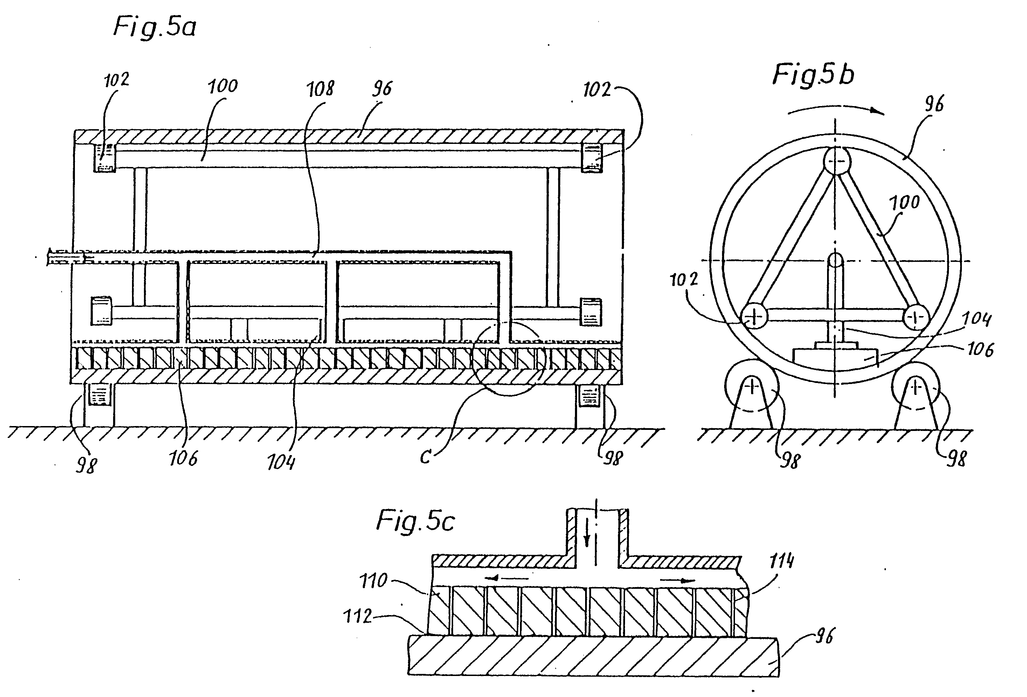

Anhand Figuren 5a, 5b und 5c ist eine Elektrostation erläutert, wie sie für die Bearbeitung von Zylinderbuchsen für Großdieselmotoren eingesetzt wird. Bei solchen Großbauteilen ist es nicht sinnvoll, der größtmöglichen elektrochemischen Wirkfläche zu arbeiten. Vorteilhafterweise wird eine Segmentelektrode verwendet.

Eine Zylinderbüchse 96 ruht auf Rollen 98, welche drehangetrieben sein können. In die Zylinderbüchse 96 ragt ein Tragrahmen 100 ein, welcher sich mittels Rollen 102 an der inneren Umfangswand der Zylinderbüchse 96 abstützt, so daß ein am Tragrahmen 100 befestigter Träger 104 relativ zur Mitte der Zylinderbüchse 96 ausgerichtet ist. An den Träger 104 ist eine Segmentelektrode 106 befestigt, welcher Elektrolyt über Leitungen 108 zugeführt wird.

Fig. 5c zeigt die in Fig. 5a mit c bezeichnete Einzelheit in vergrößertem Maßstab:

Wie ersichtlich ist die Segmentelektrode 106 derart gehalten, daß zwischen der äußeren Oberfläche ihrer Außenwand 110 und der Zylinderbüchse 96 ein kleiner Spalt 112 verbleibt. Die Außenwand 110 ist mit Elektrolytaustrittsöffnungen 114 versehen, durch welche der der Segmentelektrode 106 zugeführte Elektrolyt in den Spalt 112 austritt.

Beim elektrolytischen Abtragen können sowohl die Zylinderbüchse 96 als auch durch geeigneten Antrieb der Rahmenstruktur 100 die Segmentelektrode 106 relativ zueinander bewegt werden. Dabei kann beispielsweise die Zylinderbüchse 96 nur gedreht und die Segmentelektrode 106 nur translatorisch bewegt werden. Es versteht sich, daß Rollen 102 ebenso wie die Segmentelektrode 106 vorteilhafterweise an nicht dargestellten Hydraulikzylindern angebracht sind, mit welchen der Tragrahmen 100 innerhalb der Zylinderbüchse 96 ausrichtbar und der Spalt 112 einstellbar ist.

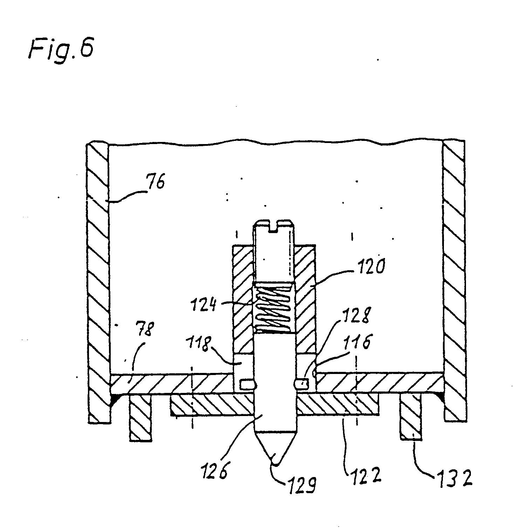

Fig. 6 zeigt das untere Ende einer ähnlich der Elektrode gemäß Fig. 3 aufgebauten Elektrode mit der Umfangswand 76 und der unteren Stirnwand 78, die mit einem zentralen Loch 116 ausgebildet ist. Durch das Loch 116 erstreckt sich eine mit einem Schlitz 118 versehene Hülse 123, welche mittels einer platte 122 mit der Stirnwand 78 verschraubt ist. In der Hülse ist gegen die Kraft einer Feder 124 ein Bolzen 126 beweglich, dessen Bewegungsamplitude durch den Schlitz 118 und einen Zapfen 128 begrenzt ist. Auf das vordere Ende des Bolzens ist ein elektrisch isolierender Konus 129, z.B. aus Keramikmaterial, geklebt, welcher in eine konische Zentrierbohrung im Grund einer zu bearbeitenden Sackbohrung des hier nicht gezeigten Werkstücks eingreift und die Elektrode in der Sackbohrung zentriert. Zur Entlastung der beschriebenen zentrierenden Führung sind an der Stirnwand 78 zusätzliche Anschläge 132 aus elektrisch isolierendem Material vorgesehen.

**Patentansprüche**

1. Verfahren zum Bearbeiten von Oberflächen eines Werkstückes aus kohlenstoffhaltigem Gußeisen, bei denen das Oberflächenmaterial in zumindest zwei voneinander getrennten, in ihren Betriebsparametern unabhängig voneinander einstellbaren, Arbeitsschritten mechanisch und elektrochemisch bearbeitet wird, dadurch gekennzeichnet, daß jeweils zuerst ein elektrochemisches Abtragen und anschließend ein mechanisches Bearbeiten erfolgt und daß beim mechanischen Bearbeiten im wesentlichen nur ein Reibplattieren der Oberfläche ohne Verschließen von Graphitlamellen durchgeführt wird.

2. Verfahren nach Anspruch 1, dadurch gekennzeichnet, daß zumindest bei dem letzten elektrochemischen Abtragen je cm$^2$ bearbeiteter Werkstückoberfläche mit einer Ladungsmenge von etwa 5 bis 15 As gearbeitet wird.

3. Verfahren nach Anspruch 1 oder 2, dadurch gekennzeichnet, daß zumindest bei dem letzten mechanischen Bearbeiten mit einer Überlappung zwischen Werkstück und einem Reibplattierungswerkzeug von etwa 1 bis 5 µm gearbeitet wird.

4. Verfahren nach einem der Ansprüche 1 bis 3, dadurch gekennzeichnet, daß zumindest beim letzten mechanischen Bearbeiten mit einem Anpreßdruck zwischen Werkstück und einem Reibplattierungswerkzeug gearbeitet wird, der zwischen 10$^4$ und fünfmal 10$^5$ N/m$^2$, vorzugsweise bei 10$^5$ N/m$^2$, liegt.

5. Verfahren nach den Ansprüchen 1 bis 4, dadurch gekennzeichnet, daß das elektrochemische Abtragen und das Reibplattieren bei Bespülen der Werkstückoberfläche mit unterschiedlichen Flüssigkeiten erfolgt.

6. Verfahren nach den Ansprüchen 1 bis 5, dadurch gekennzeichnet, daß ein Arbeitsschritt zwischengeschaltet wird, bei welchem zumindest ein Teil der Oberfläche des Werkstücks gehärtet wird.

7. Verfahren nach den Ansprüchen 1 bis 6, dadurch gekennzeichnet, daß das Werkstück ein Zylinder einer Brennkraftmaschine ist.

8. Vorrichtung zum Durchführen des Verfahrens nach Anspruch 1, mit wenigstens einer Elektrostation zum elektrolytischen Abtragen der Werkstückoberfläche, wenigstens einer Mechanikstation zum Reibplattieren der Werkstückoberfläche sowie einer zwischen der Elektrostation und der Mechanikstation angeordneten Waschstation und einer Transporteinrichtung zum Transportieren des zu bearbeitenden Werkstückes zwischen der Elektrostation, der Waschstation und der Mechanikstation, dadurch gekennzeichnet, daß die Elektrostation eine Elektrode aufweist, von deren einer Stirnfläche ein Dorn (126, 130) zum Zentrieren der Elektrode innerhalb eines Sackloches des Werkstücks vorsteht (Fig. 6).

9. Vorrichtung nach Anspruch 8, dadurch gekennzeichnet, daß die Elektrostation einen Tragrahmen (100) aufweist, welcher innerhalb einer zylindrischen Bohrung eines Werkstücks (Zylinderbüchse 96) zentriert und relativ zur Wand der Bohrung in Umfangsrichtung beweglich ist und eine Segmentelektrode (106) trägt, deren aktive Oberfläche (Außenwand 110) sich über einen Teil der Wand der Bohrung erstreckt (Fig. 5a und 5b).

10. Verwendung des Verfahrens nach Anspruch 1, zur Herstellung von Zylindern von Kolbenmaschinen mit einer Lauffläche mit einer Rauhigkeit von weniger als 4 µm, offenen Graphitlamellen und einer Plattierung mit Graphit und/oder M23 C6 (M = Metall; C = Graphit) Mischkristallen in einer Flächendichte zwischen 0,5 x 10⁻⁴ und 5 x 10⁻⁴ g/cm².

**Revendications**

1. Procédé d'usinage de surfaces d'une pièce en fonte contenant du carbone, la matière de ces surfaces étant usinée mécaniquement et électrochimiquement en au moins deux phases de travail séparées l'une de l'autre, dont les paramètres opérationnels peuvent être réglés indépendamment les uns des autres, caractérisé en ce qu'il est effectué chaque fois, tout d'abord un enlèvement de matière électrochimique, puis un usinage mécanique et en ce que, lors de l'usinage mécanique, il n'est pratiquement exécuté qu'un placage de friction de la surface, sans obturation de lamelles de graphite.

2. Procédé selon la revendication 1, caractérisé en ce qu'au moins lors du dernier enlèvement de matière électrochimique, on opère avec une quantité de charge d'environ 5 à 15 As par cm² de surface usinée de la pièce.

3. Procédé selon la revendication 1 ou 2, caractérisé en ce qu'au moins lors du dernier usinage mécanique, on opère avec un empiètement d'environ 1 à 5 µm entre la pièce et un outil de placage de friction.

4. Procédé selon l'une quelconque des revendications 1 à 3, caractérisé en ce qu'au moins lors du dernier usinage mécanique, on opère avec une pression d'application entre la pièce et un outil de placage de friction qui se situe entre 10⁴ et 5 x 10⁵ N/m², de préférence aux alentours de 10⁵ N/m².

5. Procédé selon l'une quelconque des revendications 1 à 4, caractérisé en ce que l'enlèvement de matière électrochimique et le placage de friction sont effectués avec arrosage de la surface de la pièce avec des liquides différents.

6. Procédé selon l'une quelconque des revendications 1 à 5, caractérisé en ce qu'il est intercalé une phase de travail dans laquelle une partie au moins de la surface de la pièce est trempée.

7. Procédé selon l'une quelconque des revendications 1 à 6, caractérisé en ce que la pièce usinée est un cylindre d'un moteur à combustion interne.

8. Dispositif pour l'exécution du procédé selon la revendication 1, comportant au moins un poste électrique pour l'enlèvement de matière par électrolyse sur la surface de la pièce, au moins un poste mécanique pour le placage de friction de la surface de la pièce, ainsi qu'un poste de lavage disposé entre le poste électrique et le poste mécanique et qu'un dispositif transporteur pour transporter la pièce à usiner entre le poste électrique, le poste de lavage et le poste mécanique, caractérisé en ce que le poste électrique comporte une électrode, sur une surface d'extrémité de laquelle fait saillie un mandrin (126, 130) pour le centrage de l'électrode à l'intérieur d'un trou borgne de la pièce (fig. 6).

9. Dispositif selon la revendication 8, caractérisé en ce que le poste électrique comporte un cadre porteur (100) qui est centré à l'intérieur d'une forure cylindrique d'une pièce en cours d'usinage (chemise de cylindre 96), est mobile en direction circonférentielle par rapport à la paroi de la forure et porte une électrode segmentée (106) dont la surface active (paroi extérieure 110) s'étend sur une partie de la paroi de la forure (fig. 5a et 5b).

10. Utilisation du procédé selon la revendication 1 pour la fabrication de cylindres de moteurs à combustion interne, cylindres dont la surface portante présente une rugosité de moins de 4 µm, des lamelles de graphite ouvertes et un placage avec du graphite et/ou de la solution solide de M23 C6 (M = métal, C = graphite) d'une densité par unité de surface entre 0,5 x 10⁻⁴ et 5 x 10⁻⁴ g/cm².

**Claims**

1. Method for processing surfaces of a workpiece made of carbon-containing cast iron, wherein the surface material is treated mechanically and electrochemically in at least two working steps which are separate from one another and which can be adjusted independently of one another as regards their operating parameters, characterised in that in each case first of all an electrochemical removal of material is carried out and then a mechanical processing is carried out, and that in the mechanical processing there is effected substantially only a friction plating of the surface without sealing of graphite lamellae.

2. Method according to claim 1, characterised in that at least at the last electrochemical removal of material each cm² of processed workpiece surface is worked with a charge quantity of approximately 5 to 15 As.

3. Method according to claim 1 or 2, characterised in that at least at the last mechanical processing the processing operation works with an overlap between workpiece and a friction plating tool of about 1 to 5 µm.

4. Method according to one of claims 1 to 3, characterised in that at least at the last mechanical processing the treatment is carried out with an application pressure between the workpiece and a friction plating tool which is between $10^4$ and five times $10^5$ N/m², preferably $10^5$ N/m².

5. Method according to claims 1 to 4, characterised in that the electrochemical removal of material and the friction plating are carried out with washing of the workpiece surface with various liquids.

6. Method according to claims 1 to 5, characterised in that a working step is interposed wherein at least a portion of the surface of the workpiece is hardened.

7. Method according to claims 1 to 6, characterised in that the workpiece is a cylinder of an internal combustion engine.

8. Apparatus for carrying out the method according to claim 1, with at least one electrical station for the electrolytic removal of material from the workpiece surface, at least one mechanical station for the friction plating of the workpiece surface, and also a washing station situated between the electrical station and the mechanical station, and a transporting device for transporting the workpiece to be processed between the electrical station, the washing station and the mechanical station, characterised in that the electrical station has an electrode one end face of which comprises, projecting therefrom, a mandrel (126, 130) for the centring of the electrode within a blind hole of the workpiece (Fig. 6).

9. Apparatus according to claim 8, characterised in that the electrical station has a supporting frame (100) which is centred within a cylindrical bore of a workpiece (cylinder sleeve 96) and is movable relatively to the wall of the bore in the circumferential direction, and carries a segment electrode (106) whose active surface (outer wall 110) extends over a portion of the wall of the bore (Figs. 5a and 5b).

10. Use of the method according to claim 1, for the production of piston engine cylinders which have a running surface having a roughness of less than 4 μm, open graphite lamellae, and a plating with graphite and/or M23 C6 (M = metal; C = graphite) mixed crystals in a surface density of between $0.5 \times 10^{-4}$ and $5 \times 10^{-4}$ g/cm².

*Fig.1*

Fig.2

# Fig.3

Fig.4

Fig.5a

Fig5b

Fig.5c

Fig.6